(19) Europäisches Patentamt
European Patent Office
Office européen des brevets

(11) **EP 4 244 587 B1**

(12) **EUROPÄISCHE PATENTSCHRIFT**

(45) Veröffentlichungstag und Bekanntmachung des Hinweises auf die Patenterteilung:
**22.04.2026 Patentblatt 2026/17**

(21) Anmeldenummer: **21810977.5**

(22) Anmeldetag: **11.11.2021**

(51) Internationale Patentklassifikation (IPC):
**G01J 1/42** *(2006.01)* **G01J 1/02** *(2006.01)*
**G01J 1/44** *(2006.01)*

(52) Gemeinsame Patentklassifikation (CPC):
**G01J 1/4204; G01J 1/0228; B60Q 2300/314;**
**G01J 2001/444**

(86) Internationale Anmeldenummer:
**PCT/EP2021/081326**

(87) Internationale Veröffentlichungsnummer:
**WO 2022/101314 (19.05.2022 Gazette 2022/20)**

(54) **VERFAHREN ZUM BEREITSTELLEN EINES EINE UMGEBUNGSHELLIGKEIT BETREFFENDEN AKTUELLEN HELLIGKEITSWERTS, ERFASSUNGSEINRICHTUNG UND KRAFTFAHRZEUG**

METHOD FOR PROVIDING A CURRENT BRIGHTNESS VALUE RELATING TO AN AMBIENT BRIGHTNESS, DETECTION DEVICE, AND MOTOR VEHICLE

PROCÉDÉ DE FOURNITURE D'UNE VALEUR DE LUMINOSITÉ INSTANTANÉE CONCERNANT UNE LUMINOSITÉ AMBIANTE, DISPOSITIF DE DÉTECTION ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2020 DE 102020214271**

(43) Veröffentlichungstag der Anmeldung:
**20.09.2023 Patentblatt 2023/38**

(73) Patentinhaber: **VOLKSWAGEN AKTIENGESELLSCHAFT 38440 Wolfsburg (DE)**

(72) Erfinder:
• **BEHRENDT, Ramona
  38108 Braunschweig (DE)**
• **BROSIG, Arno
  38124 Braunschweig (DE)**
• **OBERST, Frank
  29410 Salzwedel (DE)**

(56) Entgegenhaltungen:
**EP-A2- 0 286 401        EP-A2- 2 674 326**
**WO-A2-94/19212        DE-A1- 102013 221 188**
**DE-A1- 19 957 210      US-A- 4 886 960**

## EP 4 244 587 B1

**Beschreibung**

Die Erfindung betrifft ein Verfahren zum Bereitstellen eines eine Umgebungshelligkeit betreffenden aktuellen Helligkeitswerts, wobei mittels eines Helligkeitssensors mindestens ein erster Helligkeitsrohwert und zeitlich danach mindestens ein zweiter Helligkeitsrohwert erfasst werden, wobei zumindest für den mindestens einen zweiten Helligkeitsrohwert eine Mittelung mit zumindest dem mindestens eine ersten Helligkeitsrohwert durchgeführt wird und ein Ergebnis der Mittelung als ein aktueller Helligkeitsmittelwert bereitgestellt wird. Zur Erfindung gehören auch eine korrespondierende Erfassungseinrichtung für ein Kraftfahrzeug, sowie ein Kraftfahrzeug mit einer solchen Erfassungseinrichtung.

Die aktuelle Umgebungshelligkeit wird oft verwendet, um diverse Fahrzeugfunktionen anzusteuern. Vor allem bei der Ansteuerung von Scheinwerfern oder von blendfreien Rückspiegeln wird die aktuelle Umgebungshelligkeit verwendet. Allerdings ist die gemessene Helligkeit starken Schwankungen unterlegen, die zum Teil sehr kurzfristig sein können, zum Beispiel beim Durchfahren einer Allee. Da entsprechend nicht bei jeder Vorbeifahrt an einem Baum das Scheinwerferlicht an- und danach gleich wieder abgeschaltet werden soll, ist es üblich, die von einem Helligkeitssensor erfassten Helligkeitswerte, nämlich die Helligkeitsrohwerte, zunächst zu mitteln, bevor diese nachgelagerten Verfahren zugeführt werden. Insbesondere sind hierbei verschiedene Verfahren zur Mittelung von Helligkeitsrohwerten bekannt.

Beispielsweise beschreibt die DE 35 11 167 A1 eine elektronische Steuerung für automatische Kraftfahrzeug-Rückspiegel. Ein solcher Rückspiegel schaltet bei Blendung von hinten von einem vollreflektierenden Zustand in einen teilreflektierenden Zustand. Zum Bestimmen der Umschaltschwelle werden die Umgebungshelligkeit vor und hinter dem Fahrzeug verglichen und zudem eine Langzeitmittelung auf die Umgebungshelligkeit vor dem Fahrzeug angewandt, sowie eine Kurzzeitmittelung auf die Blendlichthelligkeit.

Weiterhin beschreibt die DE 199 57 210 A1 ein Verfahren und eine Vorrichtung zum automatischen Ein- und/oder Ausschalten der Beleuchtung eines Fahrzeugs, bei denen Fehlschaltungen durch Adaption des Schwellwerts zum Einschalten der Beleuchtung unter anderem durch eine fahrgeschwindigkeitsabhängige Mittelung des oder der gemessenen Helligkeitswerte und durch Ausschaltbedingungen, welche unter anderem die Umgebungshelligkeit berücksichtigt, verringert werden. Die Mittelung kann dabei insbesondere als exponentielle Glättung durchgeführt werden, die zusätzlich die Fahrzeuggeschwindigkeit als Gewichtungsfaktor berücksichtigt.

Des Weiteren beschreibt die DE 101 63 356 A1 ein Verfahren und eine Einrichtung zur automatischen Ansteuerung einer Beleuchtungseinrichtung eines Fahrzeugs, wobei das Signal eines Helligkeitssensors geglättet werden kann, um einen Scheinwerfer anzusteuern. Dazu sind zwei Glättungseinheiten vorgesehen, die sich in ihrer Dämpfung unterscheiden und damit eine mehr oder weniger schnelle Anpassung des geglätteten Signals an die Umgebungshelligkeit bereitstellen. Bei guten Lichtverhältnissen, das heißt starker Helligkeit, wird eine hohe Dämpfung gewählt, und bei schlechten Lichtverhältnissen eine schwache Dämpfung.

Durch die unterschiedlichen Mittelungsverfahren kann dem Einfluss unterschiedlicher Situationen auf die erfassten Helligkeitswerte Rechnung getragen werden. Wünschenswert wäre es dennoch, eine solche Situationsanpassung weiter verbessern zu können, und insbesondere verbesserte anwendungsspezifische Anpassungsmöglichkeiten bereitzustellen.

Die WO 94/19212 A2 beschreibt ein Verfahren zur Steuerung von Spiegeln mit veränderlichem Reflexionsgrad in Abhängigkeit von daran angelegten Steuerspannungen und zur Überwachung eines Fahrzeuginnenraums. Dabei umfasst eine Lichterfassungsvorrichtung umfasst Fotosensoranordnung mit einem Sichtfeld, das den Fahrzeuginnenraum umfasst. Eine Logik- und Steuerschaltung ermittelt ein Hintergrundlichtsignal, das die auf die Fotosensorelemente einfallenden Lichtpegel angibt, und bestimmt ein Spitzenlichtsignal in drei verschiedenen Zonen der Fotosensoranordnung. Die Spitzenlichtsignale und ein gemeinsames Hintergrundlichtsignal werden zur Bestimmung von Steuersignalen für die unabhängige Steuerung des Reflexionsniveaus einer Vielzahl von Spiegeln oder der Segmente eines Spiegels verwendet.

Aufgabe der vorliegenden Erfindung ist es daher, ein Verfahren zum Bereitstellen eines eine Umgebungshelligkeit betreffenden aktuellen Helligkeitswerts, eine Erfassungseinrichtung und ein Kraftfahrzeug bereitzustellen, die bei der Bereitstellung eines aktuellen Helligkeitswerts zumindest für bestimmte Anwendungen eine möglichst gute Anpassung erlauben.

Diese Aufgabe wird gelöst durch ein Verfahren, durch eine Erfassungseinrichtung und ein Kraftfahrzeug mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figuren.

Das erfindungsgemäße Verfahren enthält die Schritte von Anspruch 1.

Zusätzlich zu einer Mittelung wird erfindungsgemäß also noch eine Gradientenbegrenzung durchgeführt, was folglich eine zusätzliche Anpassungsmöglichkeit erlaubt. Durch eine solche Gradientenbegrenzung kann es vorteilhafterweise bewerkstelligt werden, dass die so bereitgestellten aktuellen Helligkeitswerte, die durch wiederholte Ausführung des Verfahrens in aufeinanderfolgenden Zeitschritten bereitgestellt werden können, langsamen Änderungen der Umgebungshelligkeit sehr gut folgen, während eine Anpassung an starke Helligkeitsänderungen der Umgebungshelligkeit durch die so bereitgestellten aktuellen Helligkeitswerte durch die oben definierte Gradientenbegrenzung verlangsamt ist.

Wird also beispielsweise ein aktueller Helligkeitsmittelwert als Ergebnis der oben genannten Mittelung bereitgestellt, der um mehr als den maximal zulässigen Betrag von einem zuvor bereitgestellten aktuellen Helligkeitswert abweicht, so wird nicht dieser aktuelle Helligkeitsmittelwert gleich dem neuen aktuellen Helligkeitswert gesetzt, sondern ein modifizierter Helligkeitsmittelwert, zum Beispiel ein reduzierter Helligkeitsmittelwert, falls die Abweichung positiv ist, dessen Abweichung vom vorherigen Helligkeitswert den maximal zulässigen Betrag beträgt. Unter einer Abweichung ist insbesondere der Betrag der Differenz zwischen dem aktuellen Helligkeitsmittelwert und dem zumindest einen zeitlich vorhergehend bereitgestellten Helligkeitswert zu verstehen.

Die Erfindung beruht dabei auf der Erkenntnis, dass eine solche Gradientenbegrenzung dazu geeignet ist, auf Basis der so bereitgestellten aktuellen Helligkeitswerte Tag und Nacht zu unterscheiden, und insbesondere bei Tag die tatsächliche Tageshelligkeit zu repräsentieren und diese nicht durch Fahrsituationen, wie das Durchfahren von Tunnel- oder Brückendurchfahrten, nicht zu verfälschen. Insbesondere lassen sich durch dieses Verfahren solche Fahrsituationen von einem Tag-Nacht-Wechsel unterscheiden und herausfiltern. Dies ist dadurch bedingt, dass Helligkeitsschwankungen, die durch den Wechsel zwischen Tag und Nacht bedingt sind, sehr langsam und in kleinen Schritten vonstattengehen im Vergleich zu allen übrigen Verkehrssituationen, die eine starke Änderung der Umgebungshelligkeit mit sich bringen. Beispielsweise ändert sich die Umgebungshelligkeit beim Einfahren in einen Tunnel typischerweise abrupt von Hell nach Dunkel und entsprechend fällt die Änderung der Umgebungshelligkeit auch entsprechend groß aus, was durch die Gradientenbegrenzung gefiltert werden kann. Durch die gemäß dem erfindungsgemäßen Verfahren bereitgestellten aktuellen Helligkeitswerte lässt sich also sehr gut der Tag-Nacht-Verlauf repräsentieren, während der Einfluss anderer Verkehrssituationen auf die so breitgestellten aktuellen Helligkeitswerte stark reduziert werden kann. Dabei beruht die Erfindung auf der weiteren Erkenntnis, dass es Kraftfahrzeugsysteme, insbesondere Fahrerassistenzsysteme, gibt, die gerade von derart bereitgestellten aktuellen Helligkeitswerten stark profitieren, wie beispielsweise die nachfolgend noch näher beschriebene Müdigkeitserkennung. Da die Müdigkeit eines Fahrers vielmehr davon abhängt, ob gerade Tag oder Nacht ist und weniger davon, ob der Fahrer gerade durch einen Tunnel oder eine Brücke fährt, ist es besonders vorteilhaft, einen aktuellen Helligkeitswert, wie dieser gemäß einem erfindungsgemäßen Verfahren bereitgestellt werden kann, als Indikator für die Erkennung der Müdigkeit des Fahrers zu verwenden. Im Gegensatz zur Ansteuerung von Scheinwerfern oder blendfreien Rückspiegeln sollen durch den aktuellen Helligkeitswert, der beispielsweise bei der Müdigkeitserkennung verwendet wird, eben gerade keine temporären Verkehrs- und Fahrsituationen, die eine Änderung der Umgebungshelligkeit mit sich bringen, Berücksichtigung finden. Wie stark nun solche Verkehrssituationen herausgefiltert werden sollen, kann zudem vorteilhafterweise durch geeignete Bemessung des maximal zulässigen Betrags eingestellt werden. So lassen sich durch das erfindungsgemäße Verfahren bei der Bereitstellung eines aktuellen Helligkeitswerts aus dem mindestens einen ersten und zweiten Helligkeitsrohwert, bzw. bei wiederholter Durchführung bei der Bereitstellung in jeweiligen Zeitschritten aktueller Helligkeitswerte aus Helligkeitsrohwerten viele weitere vorteilhafte zusätzliche Anpassungsmöglichkeiten bereitstellen.

Der erste Helligkeitsrohwert kann zwar, muss aber nicht notwendigerweise den zeitlich zuerst erfassten Helligkeitsrohwert darstellen. Dieser kann zum Beispiel auch einen beliebig später erfassten Helligkeitsrohwert darstellen. Der zeitlich zuerst erfasste Helligkeitsrohwert, d.h. wenn zeitlich zuvor noch keine weiteren Helligkeitsrohwerte erfasst wurden, kann gleich dem aktuellen Helligkeitsmittelwert und auch dem aktuellen Helligkeitswert gesetzt werden. Zudem ist es bevorzugt, dass das Verfahren in jeweiligen aufeinanderfolgenden Zeitschritten wiederholt durchgeführt wird, wobei der im aktuellen, insbesondere einem ersten, Zeitschritt bereitgestellte aktuelle Helligkeitswert in einem nachfolgenden, insbesondere einem zweiten, Zeitschritt gleich dem zeitlich vorhergehend bereitgestellten Helligkeitswert gesetzt wird.

Wird das Verfahren wiederholt in jeweiligen aufeinanderfolgenden Zeitschritten ausgeführt, so ergibt sich beispielsweise ein Verfahren zum Bereitstellen eines eine Umgebungshelligkeit betreffenden aktuellen Helligkeitswerts, bei welchem mittels mindestens eines Helligkeitssensors wiederholt aktuelle Helligkeitsrohwerte, umfassend den mindestens einen ersten und zweiten Helligkeitsrohwert, erfasst werden, wobei für jeden aktuellen der erfassten Helligkeitsrohwerte jeweils eine Mittelung durchgeführt wird und ein Ergebnis der Mittelung als aktueller Helligkeitsmittelwert bereitgestellt wird. Weiterhin wird für jeden aktuellen Helligkeitsmittelwert jeweils eine Gradientenbegrenzung durchgeführt, gemäß welcher eine Abweichung des aktuellen Helligkeitsmittelwerts von zumindest einem zeitlich vorhergehend bereitgestellten Helligkeitswert auf zumindest einen maximal zulässigen Betrag begrenzt wird, falls die Abweichung des aktuellen Helligkeitsmittelwerts von dem zumindest einen zeitlich vorhergehend bereitgestellten Helligkeitswert größer ist als der maximal zulässige Betrag. Ein Ergebnis der jeweiligen Gradientenbegrenzung wird dann als der aktuelle Helligkeitswert für einen jeweiligen Zeitschritt bereitgestellt.

Als Helligkeitssensor kann jeder beliebige aus dem Stand der Technik bekannte Lichtsensor, insbesondere Fotodetektor, optischer Detektor oder optoelektronischer Sensor verwendet werden. Beispiele für solche Lichtsensoren sind unter anderem Fotozellen, Fotomultiplayer, Fotodioden, Fototransistoren, Fotowiderstände, CMOS-Sensoren oder CCD-Sensoren. Ein solcher Lichtsensor kann außenseitig am Kraftfahrzeug oder auch im Fahrzeuginnenraum, dann vorzugsweise im Bereich eines Fensters beziehungsweise einer Scheibe, angeordnet sein. Es können auch mehrere solcher Lichtsensoren verwendet werden. Deren jeweilige Helligkeitsrohwerte können dann beispielsweise für einen jeweiligen Zeitschritt gemittelt werden, um zunächst einen gemittelten Helligkeitsrohwert bereitzustellen, der entsprechend den aktuellen Helligkeitsrohwerten, d.h. dem mindestens einen ersten und mindestens einen zweiten Helligkeitsrohwert, Ausgangspunkt des beschriebenen Verfahrens sein kann. Als Helligkeitssensor kann aber auch eine Kamera des Kraftfahrzeugs verwendet werden, insbesondere eine Kamera zur Umgebungserfassung, die in gleicher Weise außenseitig am Kraftfahrzeug oder im Fahrzeuginnenraum in der Nähe eines Fensters oder einer Scheibe, zum Beispiel am Rückspiegel, des Kraftfahrzeugs angeordnet ist, sodass diese zumindest einen Teil der Umgebung des Kraftfahrzeugs erfassen kann. Beispielsweise können die Helligkeitswerte der einzelnen Pixel der Kamera pro Zeitschritt, das heißt pro Bildaufnahme, gemittelt werden, wodurch ein entsprechender Helligkeitsrohwert bereitgestellt wird. Auch hier können wiederum analog mehrere Kameras verwendet werden, um durch entsprechende Mittelung pro Zeitschritt den aktuellen Helligkeitsrohwert als Ausgangspunkt für das beschriebene Verfahren bereitzustellen. Für jeden neu erfassten und damit aktuell erfassten Helligkeitsrohwert wird dann zunächst eine Mittelung durchgeführt, für welche beispielsweise ein aus dem Stand der Technik bekanntes Verfahren genutzt werden kann. Der von dem mindestens einen Helligkeitssensor bereitgestellte Helligkeitsrohwert kann entsprechend bereits einen gemittelten Helligkeitsrohwert darstellen. Weiterhin kann unter einer wiederholten Erfassung solcher aktuellen Helligkeitsrohwerte verstanden werden, dass eine solche Erfassung vorzugsweise zu definierten Zeitpunkten und weiterhin bevorzugt in zeitlich gleichen beziehungsweise konstanten Abständen erfolgt. Eine Erfassung erfolgt also in jeweiligen aufeinanderfolgenden Zeitschritten. Für einen jeweiligen solchen Zeitschritt gilt also, dass ein neuer, das heißt aktueller, Helligkeitsrohwert bereitgestellt wird, eine Mittelung auf Basis dieses Helligkeitsrohwerts durchgeführt wird und anschließend die genannte Gradientenbegrenzung durchgeführt wird, wodurch ein neuer, das heißt aktueller zu diesem Zeitschritt korrespondierender Helligkeitswert bereitgestellt wird. Dieser Ablauf wird vorzugsweise für jeden Zeitschritt wiederholt.

Bei einer besonders vorteilhaften Ausgestaltung der Erfindung wird die Gradientenbegrenzung als asymmetrische Gradientenbegrenzung durchgeführt, gemäß welcher die Abweichung des aktuellen Helligkeitsmittelwerts von dem zumindest einen zeitlich vorhergehend bereitgestellten Helligkeitswert auf einen maximal zulässigen ersten Betrag begrenzt wird, falls der aktuelle Helligkeitsmittelwert größer ist als der zumindest eine zeitlich vorhergehend bereitgestellte Helligkeitswert, und die Abweichung des aktuellen Helligkeitsmittelwerts von dem zumindest einen zeitlich vorhergehend bereitgestellten Helligkeitswert auf einen maximal zulässigen zweiten Betrag begrenzt wird, falls der aktuelle Helligkeitsmittelwert kleiner ist als der zumindest eine zeitlich vorhergehend bereitgestellte Helligkeitswert, und wobei sich der erste Betrag vom zweiten Betrag unterscheidet.

Dadurch lässt es sich vorteilhafter bewerkstelligen, dass eine Adaption der aktuellen Helligkeitswerte an die Umgebungshelligkeit unterschiedlich schnell erfolgt, je nachdem, ob die Umgebungshelligkeit zunimmt oder abnimmt. Dies beruht auf der Erkenntnis, dass die Abnahme der Umgebungshelligkeit oftmals mit dem Eintreten einer bestimmten Verkehrssituation, wie das Einfahren in einen Tunnel, zusammenhängt, wodurch auch die gemessene Helligkeit nicht mehr der natürlichen tageszeitbedingten Helligkeit entspricht. Umgekehrt hängt eine zunehmende Umgebungshelligkeit üblicherweise wiederum mit dem Wegfall eines bestimmten Verkehrsereignisses oder einer Verkehrssituation zusammen, wie zum Beispiel das Herausfahren aus dem Tunnel, sodass in dieser Situation die gemessenen Helligkeitsrohwerte, d.h. der mindestens eine erste und der mindestens eine zweite Helligkeitsrohwert, deutlich besser mit der tageszeitbedingten Umgebungshelligkeit übereinstimmen. Durch die oben genannte asymmetrische Gradientenbegrenzung ist es nun vorteilhafterweise möglich, dass eine Adaption an eine verkehrssituationsinduzierte Umgebungshelligkeitsänderung nur sehr langsam erfolgt, während eine Adaption an die "natürliche" Umgebungshelligkeit bei Wegfall dieser Verkehrssituation schneller erfolgen kann. Hierdurch lassen sich aktuelle Helligkeitswerte bereitstellen, die auch beim Auftreten solcher Verkehrssituationen immer noch sehr gut die "natürliche", das heißt tageszeitbedingte durchschnittliche, Umgebungshelligkeit repräsentieren, was wiederum besonders für die oben beschriebene Müdigkeitserkennung relevant ist.

Entsprechend stellt es eine besonders vorteilhafte Ausgestaltung der Erfindung dar, wenn der erste Betrag größer ist als der zweite Betrag. Damit wird eine Änderung in Richtung abnehmender Helligkeit stärker gradientenbegrenzt als Änderungen zu einer zunehmenden Helligkeit hin. Mit anderen Worten können so aktuelle Helligkeitswerte bereitgestellt werden, durch welche ein Anstieg zum Helleren schneller angenommen wird als ein Abfall zum Dunkleren. Dadurch können vorteilhafterweise die Einflüsse von Tunnel- oder Brückendurchfahrten oder anderen ähnlichen Verkehrsszenarien deutlich effektiver herausgefiltert werden.

Weiterhin ist es bevorzugt, dass der zumindest eine zeitlich vorhergehend bereitgestellte Helligkeitswert den zeitlich zuletzt bereitgestellten Helligkeitswert darstellt. Bei der oben beschriebenen Abweichung des aktuellen Helligkeitsmittelwerts wird also immer auf den im Zeitschritt unmittelbar zuvor bereitgestellten aktuellen Helligkeitswert Bezug genommen. Gerade der Vergleich zum unmittelbar vorhergehenden Helligkeitswert enthält eine Information darüber, wie stark sich aktuelle Umgebungssituationen und Verkehrssituationen verändern. Gerade kurzfristige Situationsänderungen sollen ja herausgefiltert werden, weshalb gerade der Bezug auf den zeitlich unmittelbar vorhergehenden Helligkeitswert besonders vorteilhaft ist.

Bei einer weiteren vorteilhaften Ausgestaltung der Erfindung wird die Mittelung als gewichtete Mittelung durchgeführt. Durch eine solche Mittelung lassen sich vorteilhafterweise Schwankungen glätten. Dies ist vor allem bei extrem kurzzeitigen Schwankungen von Vorteil, wie zum Beispiel beim Durchfahren einer Allee. Auch Schwankungen, die auf Messtoleranzen zurückzuführen sind, können so ausgemerzt oder zumindest geglättet werden. Bei einer solchen Mittelung muss nicht notwendigerweise der zeitlich zuvor erfasste erste Helligkeitsrohwert direkt eingehen, sondern kann beispielsweise auch indirekt dadurch berücksichtigt werden, dass eine Mittelung in Abhängigkeit von einem zeitlich zuvor bereitgestellten Helligkeitsmittelwert, in welchen der mindestens eine erste Helligkeitsrohwert eingegangen ist, oder dem zeitlich zuvor bereitgestellten aktuellen Helligkeitswert, in welchen der mindestens eine erste Helligkeitsrohwert eingegangen ist, durchgeführt wird. Vorteilhaft ist es dabei vor allem, eine solche Mittelung als gewichtete Mittelung durchzuführen, da ein solcher Gewichtungsfaktor eine weitere vorteilhafte Anpassungsmöglichkeit bereitstellt. Ein solcher Gewichtungsfaktor bestimmt entsprechend, wie stark ein zeitlich zuvor erfasster oder bereitgestellter Wert, das heißt der mindestens eine erste Helligkeitsrohwert, der zuletzt bereitgestellte Helligkeitsmittelwert oder der zuletzt bereitgestellte Helligkeitswert, den aktuellen Helligkeitsmittelwert beeinflusst. Durch eine starke Gewichtung zuvor erfasster oder bereitgestellter Werte kann eine starke Dämpfung beziehungsweise starke Glättung erreicht werden, während durch eine geringe Gewichtung entsprechend eine schwächere Dämpfung beziehungsweise schwächere Glättung erreicht werden kann. Im vorliegenden Fall ist eine stärkere Gewichtung zugunsten des aktuell erfassten zweiten Helligkeitsrohwerts von Vorteil, da eine zu starke Glättung durch die Mittelung die Auswirkungen der nachfolgenden Gradientenbegrenzung mindert. Durch eine stärkere Gewichtung zugunsten des aktuell erfassten zweiten Helligkeitsrohwerts dagegen ist die nachfolgende Gradientenbegrenzung wirkungsvoller, was wiederum das Herausfiltern von Einflüssen bestimmter Verkehrssituationen verbessert.

Gemäß einer weiteren vorteilhaften Ausgestaltung der Erfindung wird die Mittelung als eine exponentielle Glättung durchgeführt. Hierbei wird also der mindestens eine zweite Helligkeitsrohwert mit dem zeitlich unmittelbar zuvor bereitgestellten Helligkeitswert gewichtet gemittelt. Auch hier lässt sich der Gewichtungsfaktor wie oben beschrieben geeignet wählen. Eine exponentielle Glättung stellt eine besonders vorteilhafte und einfache Möglichkeit zur Glättung der Helligkeitsrohwerte dar.

Bei einer weiteren vorteilhaften Ausgestaltung der Erfindung wird in Abhängigkeit von dem bereitgestellten aktuellen Helligkeitswert mindestens eine Kraftfahrzeugfunktion gesteuert, insbesondere eine von einer Scheinwerferfunktion eines Scheinwerfers des Kraftfahrzeugs verschiedene Kraftfahrzeugfunktion, sowie vorzugsweise auch eine von einer Einstellung eines blendfreien Rückspielgels verschiedene Kraftfahrzeugfunktion. Wie eingangs bereits beschrieben, ist es besonders vorteilhaft, den so ermittelten aktuellen Helligkeitswert zur Steuerung von Kraftfahrzeugfunktionen zu verwenden, insbesondere solchen, bei denen die Kenntnis über die aktuelle Tageszeit, die sich somit aus dem aktuell bereitgestellten Helligkeitswert ableiten lässt, einen Mehrwert bringt. Mit anderen Worten sollen hier vor allem Kraftfahrzeugfunktionen gesteuert werden, bei denen es einen Unterschied macht, ob es Tag oder Nacht ist, jedoch keinen Unterschied macht, ob das Kraftfahrzeug gerade durch einen Tunnel oder unter einer Brücke durchfährt oder nicht. Auch ist dieses Verfahren vorteilhaft für Kraftfahrzeug- und Assistenzfunktionen, bei denen die Kenntnis der eigentlichen Tageshelligkeit relevant ist, unabhängig von Fahrsituationen, die eine "künstliche" Helligkeitsänderung bewirken. Auf Scheinwerferfunktionen trifft dies jedoch nicht zu, da ein Scheinwerfer auch eingeschaltet werden soll, wenn das Kraftfahrzeug durch einen Tunnel oder einer größeren Brücke durchfährt, ebenso wie nachts.

Besonders vorteilhaft ist es, wie eingangs bereits erwähnt, wenn die mindestens eine Kraftfahrzeugfunktion eine Müdigkeitserkennung darstellt. Dabei kann beispielsweise eine aktuelle eine Müdigkeit des Fahrers des Kraftfahrzeugs beschreibende Größe in Abhängigkeit von dem aktuellen Helligkeitswert ermittelt werden und in Abhängigkeit von der aktuellen Größe eine Warnung an den Fahrer ausgegeben werden. Ergibt sich also, dass aufgrund der aktuellen Größe, welche die Müdigkeit des Fahrers beschreibt, festgestellt wird, dass der Fahrer gerade müde ist, zum Beispiel wenn ein bestimmter Schwellwert für diese Größe überschritten wird, so kann durch die Ausgabe der Warnung der Fahrer darauf aufmerksam gemacht und gewarnt werden. Eine solche Warnung kann in optischer, akustischer oder haptischer Form ausgegeben werden. Neben der aktuellen Helligkeit, die durch den aktuellen Helligkeitswert repräsentiert wird, können in die aktuelle Größe für die Müdigkeit des Fahrers auch weitere Parameter eingehen, zum Beispiel die bisherige Fahrzeit und/oder die Monotonie der Fahrsituation oder ähnliches. Dadurch, dass es bei der Bereitstellung des aktuellen Helligkeitswerts möglich ist, Einflüsse von Fahrsituationen, wie das Durchfahren eines Tunnels, herauszufiltern, kommt es bei der Müdigkeitserkennung deutlich weniger häufig zu Fehlauslösungen. Diese die aktuelle Müdigkeit des Fahrers beschreibende Größe kann beispielsweise einen gemäß einer vorbestimmten Metrik bereitgestellten numerischen Wert darstellen, der das Ausmaß der Müdigkeit des Fahrers repräsentiert, zum Beispiel in Form eines Müdigkeitslevels.

Es können aber auch andere Kraftfahrzeugfunktionen in Abhängigkeit von dem so ermittelten beziehungsweise bereitgestellten aktuellen Helligkeitswert angesteuert werden. Beispielsweise kann auch eine Verkehrszeichenerkennung unterstützend den aktuellen Helligkeitswert verwenden, um zu bestimmen, ob bestimmte Geschwindigkeitsbegrenzungen aktuell gültig sind oder nicht, zum Beispiel solche, die nur nachts gelten. Auch hierbei steht beispielsweise der Tag-Nacht-Unterschied im Vordergrund, während Verkehrs- und Fahrsituationen wie Tunneldurchfahrten unerheblich sind. Ein weiteres Beispiel für eine Fahrzeugfunktion wäre das Einschalten einer speziellen Nacht-Ambientebeleuchtung, gemäß welcher beispielsweise auch Displays, wie das Kombiinstrument im Kraftfahrzeug, nachts anders beleuchtet werden können als tagsüber, um die Lesbarkeit zu erleichtern, Energie zu sparen oder ähnliches.

Des Weiteren betrifft die Erfindung eine Erfassungseinrichtung für ein Kraftfahrzeug nach Anspruch 9

Die für das erfindungsgemäße Verfahren und seine Ausgestaltungen genannten Vorteile gelten in gleicher Weise für die erfindungsgemäße Erfassungseinrichtung. Darüber hinaus ermöglichen die im Zusammenhang mit dem erfindungsgemäßen Verfahren und seinen Ausführungsformen genannten Verfahrensschritte die Weiterbildung der erfindungsgemäßen Erfassungseinrichtung durch weitere korrespondierende gegenständliche Merkmale.

Des Weiteren betrifft die Erfindung auch ein Kraftfahrzeug mit einer erfindungsgemäßen Erfassungseinrichtung oder einer ihrer Ausgestaltungen. Auch hier gelten die im Zusammenhang mit dem erfindungsgemäßen Verfahren und seinen Ausgestaltungen genannten Vorteile in gleicher Weise für das erfindungsgemäße Kraftfahrzeug.

Die Erfindung umfasst auch die Kombinationen der Merkmale der beschriebenen Ausführungsformen.

Im Folgenden werden Ausführungsbeispiele der Erfindung beschrieben. Hierzu zeigt:

Fig. 1    eine schematische Darstellung eines Kraftfahrzeugs mit einer Erfassungseinrichtung gemäß einem Ausführungsbeispiel der Erfindung;

Fig. 2    ein Ablaufdiagramm zur Veranschaulichung eines Verfahrens zum Bereitstellen eines eine aktuelle Umgebungshelligkeit repräsentierenden aktuellen Helligkeitswerts gemäß einem Ausführungsbeispiel der Erfindung; und

Fig. 3    eine grafische Veranschaulichung der Helligkeitsrohwerte, der bereitgestellten Helligkeitsmittelwerte und der daraus errechneten aktuellen Helligkeitswerte im zeitlichen Verlauf gemäß einem Ausführungsbeispiel der Erfindung.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

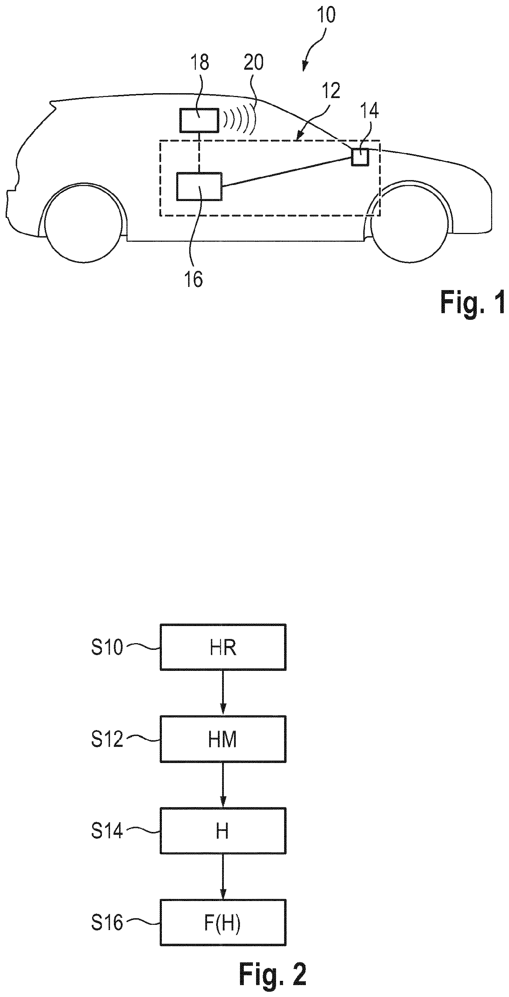

Fig. 1 zeigt eine schematische Darstellung eines Kraftfahrzeugs 10 mit einer Erfassungseinrichtung 12 gemäß einem Ausführungsbeispiel der Erfindung. Die Erfassungseinrichtung 12 ist dazu ausgelegt, einen eine Umgebungshelligkeit betreffenden aktuellen Helligkeitswert bereitzustellen. Die Erfassungseinrichtung 12 umfasst dabei mindestens einen Helligkeitssensor 14, sowie eine Auswerteeinrichtung 16. Mittels des mindestens einen Helligkeitssensors 14 können wiederholt aktuelle Helligkeitsrohwerte erfasst und der Auswerteeinrichtung 16 zur Weiterverarbeitung zur Verfügung gestellt werden. Exemplarisch ist in diesem Beispiel nur ein einzelner Helligkeitssensor 14 dargestellt, das Kraftfahrzeug 10 kann als Teil der Erfassungseinrichtung 12 aber auch mehrere solcher Helligkeitssensoren 14 umfassen. Als Helligkeitssensoren 14 können im Übrigen auch Kameras des Kraftfahrzeugs 10 verwendet werden. Die Auswerteeinrichtung 16 ist ausgelegt, eine Glättung und situative Gradientenbegrenzung des Rohwerts des Helligkeitssensors 14 durchzuführen, wie dies zu Fig. 2 später näher erläutert wird. Dabei wird insbesondere zunächst die aktuelle Umgebungshelligkeit über den im oder am Fahrzeug 10 verbauten Helligkeitssensor 14 gemessen. Weiterhin wird der Messwert zunächst mittels der Auswerteeinrichtung 16 geglättet, um Schwankungen im Signal auszugleichen, und daraufhin wird das geglättete Signal in der Art gradientenbegrenzt, dass ein Anstieg zum Helleren schneller angenommen wird, als ein Abfall zum Dunkleren. Dies hat den großen Vorteil, dass Einflüsse von Tunnel- oder Brückendurchfahrten oder anderen Fahrsituationen herausgefiltert werden können. Dies ist besonders vorteilhaft, wenn der so bereitgestellte aktuelle Helligkeitswert zum Beispiel zur Müdigkeitserkennung verwendet wird. Wie in Fig. 1 veranschaulicht, kann zu diesem Zweck die Ausgabeeinrichtung 16 den so bereitgestellten aktuellen Helligkeitswert an eine Müdigkeitserkennung 18 des Kraftfahrzeugs 10 übergeben, welche in Abhängigkeit von dem übermittelten aktuellen Helligkeitswert eine Beschreibungsgröße für eine aktuelle Müdigkeit des Fahrers ermitteln und mit einem Schwellwert vergleichen kann. Wird dieser Schwellwert überschritten, so kann durch die Müdigkeitserkennung 18 ein Warnsignal 20 ausgegeben werden.

Fig. 2 zeigt ein Ablaufdiagramm zur Veranschaulichung eines Verfahrens zum Bereitstellen eines eine Umgebungshelligkeit betreffenden aktuellen Helligkeitswerts gemäß einem Ausführungsbeispiel der Erfindung. Das Verfahren beginnt im Schritt S10, in welchem durch mindestens einen Helligkeitssensor 14 ein Helligkeitsrohwert HR bereitgestellt wird. Sofern mehrere Helligkeitssensoren 14 vorgesehen sind, können die jeweils erfassten Helligkeitsrohwerte HR, die einem gleichen Zeitschritt zugeordnet werden können, auch gemittelt werden und dann sozusagen als gemittelter Helligkeitsrohwert HR im Schritt S10 bereitgestellt werden. Dieser im Schritt S10 bereitgestellte Helligkeitsrohwert HR wird im nachfolgenden Schritt S12 einer Mittelung unterzogen. Bei dieser Mittelung kann der aktuell erfasste Helligkeitsrohwert HR mit zumindest einem zeitlich zuvor erfassten Helligkeitsrohwert HR oder einer daraus ermittelten Größe, wie zum Beispiel dem zeitlich zuvor bereitgestellten Helligkeitswert H, gemittelt werden, insbesondere gemäß einer gewichteten Mitteilung. Besonders einfach und effizient hat sich dabei vor allem eine exponentielle Glättung als Mittelung herausgestellt. Als Ergebnis dieser Mittelung wird ein aktueller Helligkeitsmittelwert HM bereitgestellt. Wird dieser Helligkeitsmittelwert gemäß einer exponentiellen Glättung bereitgestellt, so berechnet dieser sich wie folgt:

$$HM(t_n) = a\, HR(t_n) + (1-a)\, H(t_{n-1})$$

wobei $HM(t_n)$ den Helligkeitsmittelwert zum aktuellen Zeitpunkt $t_n$ darstellt, $HR(t_n)$ den vom Helligkeitssensor 14 bereitgestellten Helligkeitsrohwert HR zum aktuellen Zeitpunkt $t_n$ und $H(t_{n-1})$ den im vorhergehenden Zeitschritt $t_{n-1}$ ermittelten Helligkeitswert H. a ist dabei der Gewichtungsfaktor für den gilt $0 \leq a \leq 1$. Vorzugsweise ist a größer 0,5 und liegt besonders bevorzugt nahe bei 1, da hierdurch eine zu starke Glättung vermieden werden kann, die sich nachteilig auf die nachfolgende Gradientenbegrenzung auswirkt. Bei der Initialisierung des Verfahrens, bei welcher noch keine vorher ermittelten Helligkeitswerte H vorliegen, kann der zum Zeitpunkt $t_0$ ermittelte Helligkeitsrohwert HR gleich dem aktuellen Helligkeitswert H gesetzt werden, das heißt es gilt:

$$HR(t_0) = H(t_0).$$

Dieser so bereitgestellte Helligkeitsmittelwert HM wird nun weiterhin im Schritt S14 eine Gradientenbegrenzung unterzogen. Als Ergebnis dieser Gradientenbegrenzung wird letztendlich der aktuelle Helligkeitswert H bereitgestellt. Gemäß dieser Gradientenbegrenzung wird eine Abweichung des aktuellen Helligkeitsmittelwerts HM von zumindest einem zeitlich vorhergehend bereitgestellten Helligkeitswert H, insbesondere von dem im unmittelbar vorangegangenen Zeitschritt $t_{n-1}$ bereitgestellten Helligkeitswert H auf zumindest einen maximal zulässigen Betrag begrenzt, falls diese Abweichung des aktuellen Helligkeitsmittelwerts HM von diesem zuvor bereitgestellten Helligkeitswert H größer ist als dieser maximal zulässige Betrag.

Dabei ist es zudem bevorzugt, dass diese Gradientenbegrenzung asymmetrisch durchgeführt wird, das heißt, die Begrenzung erfolgt dabei unterschiedlich stark, je nachdem, ob der aktuelle Helligkeitsmittelwert größer oder kleiner ist als der zuvor bereitgestellte Helligkeitswert H. Es können also zwei unterschiedliche maximal zulässige Beträge definiert sein, je nachdem eine Abweichung nach oben oder unten in Bezug auf den vorhergehenden Helligkeitswert H vorliegt. Ist der aktuelle Helligkeitsmittelwert HM größer als der zuvor ermittelte Helligkeitswert H, so fällt die Begrenzung weniger stark aus und der maximal zulässige Betrag in Bezug auf die Abweichung ist größer als in dem Fall, in welchem der aktuelle Helligkeitsmittelwert HM kleiner ist als der zuvor bereitgestellte Helligkeitswert H. Diese Art der Gradientenbegrenzung zeigt also die Besonderheit, dass auf Helligkeit schneller reagiert wird als auf Dunkelheit. Mit anderen Worten wird zunehmende Dunkelheit über die so bereitgestellten Helligkeitswerte H nur langsam angelernt. Somit können Fahrereignisse, wie das Einfahren in einen Tunnel, vorteilhaft herausgefiltert werden, da solche Ereignisse gerade bei der Müdigkeitserkennung keine Rolle spielen. Gemäß der asymmetrischen Gradientenbegrenzung ergibt sich der aktuelle Helligkeitswert $H(t_n)$ zum aktuellen Zeitpunkt $t_n$ wie folgt aus dem aktuellen Helligkeitsmittelwert $HM(t_n)$ zum aktuellen Zeitpunkt $t_n$:

Falls $HM(t_n) > H(t_{n-1})$, d.h. falls der aktuelle Helligkeitsmittelwert HM ist größer als der zuletzt bereitgestellte Helligkeitswert H ist:

$$H(t_n) = HM(t_n) \qquad \text{falls} \qquad \left| HM(t_n) - H(t_{n-1}) \right| \leq \Delta 1$$

$$H(t_n) = H(t_{n-1}) + \Delta 1 \qquad \text{falls} \qquad \left| HM(t_n) - H(t_{n-1}) \right| > \Delta 1$$

wobei $\Delta 1$ einen definierten ersten maximal zulässigen Betrag darstellt.

Falls $HM(t_n) \leq H(t_{n-1})$, d.h. falls der aktuelle Helligkeitsmittelwert HM kleiner als der zuletzt bereitgestellte Helligkeitswert oder gleich dem zuletzt bereitgestellten Helligkeitswert H ist:

$$H(t_n) = HM(t_n) \qquad \text{falls} \qquad \left| HM(t_n) - H(t_{n-1}) \right| \leq \Delta 2$$

$$H(t_n) = H(t_{n-1}) - \Delta 2 \qquad \text{falls} \qquad \left| HM(t_n) - H(t_{n-1}) \right| > \Delta 2$$

wobei $\Delta 2$ einen definierten zweiten maximal zulässigen Betrag darstellt.

Vorzugsweise ist $\Delta 1 \neq \Delta 2$, und insbesondere $\Delta 1 > \Delta 2$. Beispielsweise kann der erste maximal zulässige Betrag $\Delta 1$ doppelt so groß, dreimal so groß oder viermal so groß definiert sein wie der zweite maximal zulässige Betrag $\Delta 2$.

Im Anschluss an die Gradientenbegrenzung kann der so bereitgestellte aktuelle Helligkeitswert H im Schritt 16 einem Fahrerassistenzsystem bereitgestellt werden, wie beispielsweise der genannten Müdigkeitserkennung, sodass entsprechend eine Fahrzeugfunktion F(H) in Abhängigkeit von dem aktuellen Helligkeitswert H ausgeführt oder gesteuert werden kann. Im Falle der Müdigkeitserkennung kann, wie bereits zu Fig. 1 erwähnt, eine Beschreibungsgröße, die den aktuellen Müdigkeitslevel des Fahrers widerspiegelt,, insbesondere unter Berücksichtigung weiterer Einflussgrößen, ermittelt werden, und im Falle, dass aufgrund dieser Beschreibungsgröße festgestellt wird, dass der Fahrer sehr müde ist, kann ein entsprechendes Warnsignal 20 ausgegeben werden. Durch die beschriebene Bereitstellung der Helligkeitswerte H lassen sich vor allem Fehlauslösungen und Fehlmeldungen durch ein solches Müdigkeitswarnsystem deutlich reduzieren.

Das beschriebene Verfahren beginnt dann erneut im Schritt S10 für den nächsten Zeitschritt. Insbesondere kann dieses Verfahren wiederholt während des gesamten Betriebs des Kraftfahrzeugs 10 durchgeführt werden oder auch nur dann, wenn, gemäß einer vom Fahrer vorgenommenen Einstellung, die Müdigkeitserkennung aktiviert wurde.

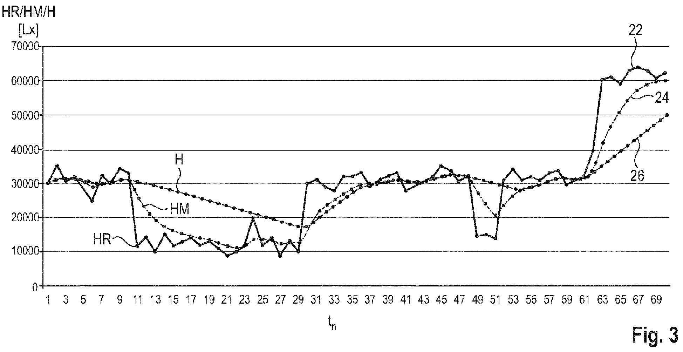

Fig. 3 zeigt eine grafische Veranschaulichung erfasster Helligkeitsrohwerte HR, daraus errechneter Helligkeitsmittelwerte HM und die letztendlich daraus bereitgestellten gradientenbegrenzten Helligkeitswerte H im zeitlichen Verlauf t. Auf der x-Achse sind entsprechend die Zeitschritte $t_n$ aufgetragen und auf der y-Achse die Helligkeitsrohwerte HR, die Helligkeitsmittelwerte HM und die Helligkeitswerte H in Lux. Weiterhin ist die Kurve, auf welcher die Helligkeitsrohwerte HR liegen, mit 22 bezeichnet, die Kurve der Helligkeitsmittelwerte HM mit 24, und die Kurve der Helligkeitswerte H mit 26. Aus Gründen der Übersichtlichkeit ist pro Kurve nur ein Helligkeitsrohwerte HR, ein Helligkeitsmittelwert HM und Helligkeitswert H mit einem Bezugszeichen versehen.

An den Helligkeitsrohwerten HR ist beispielsweise zu erkennen, dass zirka beim 11. Zeitschritt $t_{11}$ die Umgebungshelligkeit abrupt abnimmt. Ab diesem Zeitschritt bleibt die Helligkeit mehr oder weniger konstant auf diesem dunklen Niveau bis zirka zum 29. Zeitschritt $t_{29}$. Deutlich zu erkennen ist zum einen weiterhin, dass die Kurve der Helligkeitsmittelwerte 24 in diesem Bereich deutlich weniger Schwankungen unterliegt als die Kurve 22 der Helligkeitsrohwerte HR. Dies ist dadurch bedingt, dass die beschriebene Mittelung einen Glättungseffekt hat. Weiterhin ist in diesem Bereich vor allem aber deutlich zu erkennen, dass die Kurve 26 der aktuellen Helligkeitswerte H auf diese abrupte Verdunkelung kaum reagiert, insbesondere deutlich langsamer an diese abnehmende Helligkeit adaptiert wird, als beispielsweise die Kurve 24 der Helligkeitsmittelwerte. Anders verhält es sich dagegen ab dem 29. Zeitschritt, ab welchem die Umgebungshelligkeit wieder abrupt zunimmt, was wieder an der Kurve 22 der Helligkeitsrohwerte HR zu erkennen ist. Hier folgt auch die Kurve 26 der Helligkeitswerte H diesem Anstieg deutlich schneller, insbesondere fast genauso schnell, wie auch die Kurve 24 der Helligkeitsmittelwerte. Dieser Verlauf zwischen dem 11. und 29. Zeitschritt entspricht quasi einem Tunnelfahrszenario. Durch die beschriebene Berechnung der Helligkeitswerte H lässt sich der Einfluss einer solchen Tunnelfahrt sehr gut herausfiltern. Einer Anpassung an langfristige Änderungen, wie zum Beispiel dem Tag-Nacht-Helligkeitswechsel, kann dennoch problemlos gefolgt werden.

Insgesamt zeigen die Beispiele, wie durch die Erfindung ein Verfahren zur Ermittlung der geschätzten Tageshelligkeit bereitgestellt werden kann, gemäß welcher der Einfluss temporärer Fahrszenarien auf die aktuell ermittelten Helligkeitswerte herausgefiltert werden kann, was durch eine Gradientenbegrenzung und auf besonders vorteilhafte Weise durch die Besonderheit, dass schneller auf Helligkeit als auf Dunkelheit reagiert werden kann, bewerkstelligt wird. Somit geht dieses Verfahren über eine reine Glättung des Signals des Helligkeitssensors weit hinaus und ermöglicht eine deutlich bessere Situationsanpassung an vielzählige weitere Situationen, an die bislang noch nicht gedacht wurde.

Bezugszeichenliste

| 10 | Kraftfahrzeug |
| 12 | Erfassungseinrichtung |
| 14 | Helligkeitssensor |
| 16 | Auswerteeinrichtung |
| 18 | Müdigkeitserkennung |
| 20 | Warnsignal |
| 22 | Kurve der Helligkeitsrohwerte |
| 24 | Kurve der Helligkeitsmittelwerte |
| 26 | Kurve der Helligkeitswerte |
| H | Helligkeitswert |
| HM | Helligkeitsmittelwert |
| HR | Helligkeitsrohwert |
| F(H) | Fahrzeugfunktion |
| $t_n$ | Zeitschritt |
| S10 | Schritt |
| S12 | Schritt |

S14     Schritt
S16     Schritt

**Patentansprüche**

1.  Verfahren zum Bereitstellen eines eine Umgebungshelligkeit betreffenden aktuellen Helligkeitswerts $H(t_n)$, wobei mittels mindestens eines Helligkeitssensors (14) zu einem Zeitpunkt $t_{n-1}$ ein erster Helligkeitsrohwert $HR(t_{n-1})$ und zeitlich danach zu einem Zeitpunkt $t_n$ mindestens ein zweiter Helligkeitsrohwert $HR(t_n)$ erfasst werden, wobei zumindest für den mindestens einen zweiten Helligkeitsrohwert $HR(t_n)$ eine Mittelung mit zumindest dem mindestens einen ersten Helligkeitsrohwert $HR(t_{n-1})$ durchgeführt wird, und ein Ergebnis der Mittelung als ein aktueller Helligkeits-mittelwert $HM(t_n)$ bereitgestellt wird, **dadurch gekennzeichnet, dass** nachfolgend für den aktuellen Helligkeits-mittelwert $HM(t_n)$ eine Gradientenbegrenzung durchgeführt wird, gemäß welcher eine Abweichung des aktuellen Helligkeitsmittelwerts $HM(t_n)$ von zumindest einem zeitlich vorhergehend bereitgestellten Helligkeitswert $H(t_{n-1})$ auf zumindest einen maximal zulässigen Betrag begrenzt wird, falls die Abweichung des aktuellen Helligkeitsmittelwerts $HM(t_n)$ von dem zumindest einen zeitlich vorhergehend bereitgestellten Helligkeitswert $H(t_{n-1})$ größer ist als der zumindest eine maximal zulässige Betrag, und ein Ergebnis der Gradientenbegrenzung als der aktuelle Helligkeits-wert $H(t_n)$ bereitgestellt wird, wobei, falls die Abweichung des aktuellen Helligkeitsmittelwerts $HM(t_n)$ von dem zumindest einen zeitlich vorhergehend bereitgestellten Helligkeitswert $H(t_{n-1})$ nicht größer ist als der zumindest eine maximal zulässige Betrag, als das Ergebnis für den aktuellen Helligkeitswert $H(t_n)$ der aktuelle Helligkeitsmittelwert $HM(t_n)$ bereitgestellt wird.

2.  Verfahren nach Anspruch 1,
    **dadurch gekennzeichnet, dass**
    die Gradientenbegrenzung als asymmetrische Gradientenbegrenzung durchgeführt wird, gemäß welcher die Abweichung des aktuellen Helligkeitsmittelwerts $HM(t_n)$ von dem zumindest einen zeitlich vorhergehend bereitge-stellten Helligkeitswert $H(t_{n-1})$ auf einen maximal zulässigen ersten Betrag $\Delta 1$ begrenzt wird, falls der aktuelle Helligkeitsmittelwert $HM(t_n)$ größer ist als der zumindest eine zeitlich vorhergehend bereitgestellte Helligkeitswert $H(t_{n-1})$, und die Abweichung des aktuellen Helligkeitsmittelwerts $HM(t_n)$ von dem zumindest einen zeitlich vorher-gehend bereitgestellten Helligkeitswert $H(t_{n-1})$ auf einen maximal zulässigen zweiten Betrag $\Delta 2$ begrenzt wird, falls der aktuelle Helligkeitsmittelwert $HM(t_n)$ kleiner ist als der zumindest eine zeitlich vorhergehend bereitgestellte Helligkeitswert $H(t_n)$, wobei sich der erste Betrag $\Delta 1$ vom zweiten Betrag $\Delta 2$ unterscheidet.

3.  Verfahren nach Anspruch 2,
    **dadurch gekennzeichnet, dass**
    der erste Betrag größer ist als der zweite Betrag.

4.  Verfahren nach einem der vorhergehenden Ansprüche,
    **dadurch gekennzeichnet, dass**
    der zumindest eine zeitlich vorhergehend bereitgestellte Helligkeitswert $H(t_{n-1})$ den zeitlich zuletzt bereitgestellten Helligkeitswert darstellt.

5.  Verfahren nach einem der vorhergehenden Ansprüche,
    **dadurch gekennzeichnet, dass**
    die Mittelung für den mindestens einen zweiten Helligkeitsrohwert $HR(t_n)$ als gewichtete Mittelung durchgeführt wird.

6.  Verfahren nach einem der vorhergehenden Ansprüche,
    **dadurch gekennzeichnet, dass**
    die Mittelung als eine exponentielle Glättung durchgeführt wird.

7.  Verfahren nach einem der vorhergehenden Ansprüche,
    **dadurch gekennzeichnet, dass**
    in Abhängigkeit von dem bereitgestellten aktuellen Helligkeitswert $H(t_n)$ mindestens eine Kraftfahrzeugfunktion (F(H), 18) gesteuert wird, insbesondere eine von einer Scheinwerferfunktion eines Scheinwerfers eines Kraftfahrzeugs (10) verschiedene Kraftfahrzeugfunktion (F(H), 18).

8.  Verfahren nach einem der vorhergehenden Ansprüche,
    **dadurch gekennzeichnet, dass**
    die mindestens eine Kraftfahrzeugfunktion (F(H), 18) eine Müdigkeitserkennung (18) darstellt, wobei eine aktuelle eine Müdigkeit des Fahrers des Kraftfahrzeugs (10) beschreibende Größe in Abhängigkeit von dem aktuellen Helligkeitswert (H) ermittelt wird und in Abhängigkeit von der aktuellen Größe eine Warnung (20) an den Fahrer ausgegeben wird.

9. Erfassungseinrichtung (12) für ein Kraftfahrzeug (10), zum Bereitstellen eines eine Umgebungshelligkeit betreffenden aktuellen Helligkeitswerts $H(t_n)$, wobei die Erfassungseinrichtung (12) mindestens einen Helligkeitssensor (14) aufweist, der dazu ausgelegt ist, zu einem ersten Zeitpunkt $t_{n-1}$ mindestens einen ersten Helligkeitsrohwert $HR(t_{n-1})$ und zeitlich danacl zu einem zweiten Zeitpunkt $t_n$ mindestens einen zweiten Helligkeitsrohwert $HR(t_n)$ zu erfassen, wobei die Erfassungseinrichtung (12) eine Auswerteeinheit (16) aufweist, die dazu ausgelegt ist, zumindest für den mindestens einen zweiten Helligkeitsrohwert $HR(t_n)$ eine Mittelung mit zumindest dem mindestens einen ersten Helligkeitsrohwert $HR(t_{n-1})$ durchzuführen und ein Ergebnis der Mittelung als einen aktuellen Helligkeitsmittelwert $HM(t_n)$ bereitzustellen,
**dadurch gekennzeichnet, dass**
die Auswerteeinheit (16) dazu ausgelegt ist, nachfolgend für den aktuellen Helligkeitsmittelwert $HM(t_n)$ eine Gradientenbegrenzung durchzuführen, gemäß welcher eine Abweichung des aktuellen Helligkeitsmittelwerts $HM(t_n)$ von zumindest einem zeitlich vorhergehend bereitgestellten Helligkeitswert $H(t_n)$ auf zumindest einen maximal zulässigen Betrag begrenzt wird, falls die Abweichung des aktuellen Helligkeitsmittelwerts $HM(t_n)$ von dem zumindest einen zeitlich vorhergehend bereitgestellten Helligkeitswert $H(t_{n-1})$ größer ist als der zumindest eine maximal zulässige Betrag, und ein Ergebnis der Gradientenbegrenzung als den aktuellen Helligkeitswert $H(t_n)$ bereitzustellen, und wobei die Auswerteeinheit (16) so eingerichtet ist, dass, falls die Abweichung des aktuellen Helligkeitsmittelwerts $HM(t_n)$ von dem zumindest einen zeitlich vorhergehend bereitgestellten Helligkeitswert $H(t_n)$ nicht größer ist als der zumindest eine maximal zulässige Betrag, als das Ergebnis für den aktuellen Helligkeitswert $H(t_n)$ der aktuelle Helligkeitsmittelwert $HM(t_n)$ bereitgestellt wird.

10. Kraftfahrzeug (10) mit einer Erfassungseinrichtung (12) nach Anspruch 9.

## Claims

1. Method for providing a current brightness value $H(t_n)$ relating to ambient brightness, a first raw brightness value $HR(t_{n-1})$ being detected at a point in time $t_{n-1}$ and at least one second raw brightness value $HR(t_n)$ being detected chronologically thereafter at a point in time $t_n$, by means of at least one brightness sensor (14), an averaging using at least the at least one first raw brightness value $HR(t_{n-1})$ being carried out at least for the at least one second raw brightness value $HR(t_n)$, and a result of the averaging being provided as a current average brightness value $HM(t_n)$, **characterized in that** a gradient limitation is subsequently carried out for the current average brightness value $HM(t_n)$, according to which gradient limitation a deviation of the current average brightness value $HM(t_n)$ from at least one chronologically previously provided brightness value $H(t_{n-1})$ is limited to at least one maximum permissible amount if the deviation of the current average brightness value $HM(t_n)$ from the at least one chronologically previously provided brightness value $H(t_{n-1})$ is greater than the at least one maximum permissible amount, and a result of the gradient limitation is provided as the current brightness value $H(t_n)$, the current average brightness value $HM(t_n)$ being provided as the result for the current brightness value $H(t_n)$ if the deviation of the current average brightness value $HM(t_n)$ from the at least one chronologically previously provided brightness value $H(t_{n-1})$ is not greater than the at least one maximum permissible amount.

2. Method according to claim 1,
**characterized in that**
the gradient limitation is carried out as asymmetric gradient limitation, according to which the deviation of the current average brightness value $HM(t_n)$ from the at least one chronologically previously provided brightness value $H(t_{n-1})$ is limited to a maximum permissible first amount $\Delta 1$ if the current average brightness value $HM(t_n)$ is greater than the at least one chronologically previously provided brightness value $H(t_{n-1})$, and the deviation of the current average brightness value $HM(t_n)$ from the at least one chronologically previously provided brightness value $H(t_{n-1})$ is limited to a maximum permissible second amount $\Delta 2$ if the current average brightness value $HM(t_n)$ is smaller than the at least one chronologically previously provided brightness value $H(t_n)$, the first amount $\Delta 1$ being different from the second amount $\Delta 2$.

3. Method according to claim 2,
**characterized in that**
the first amount is greater than the second amount.

4. Method according to any of the preceding claims,
**characterized in that**
the at least one chronologically previously provided brightness value $H(t_{n-1})$ represents the chronologically most recently provided brightness value.

5. Method according to any of the preceding claims,
**characterized in that**
the averaging for the at least one second raw brightness value $HR(t_n)$ is carried out as weighted averaging.

6. Method according to any of the preceding claims,
**characterized in that**
the averaging is carried out as an exponential smoothing.

7. Method according to any of the preceding claims,
**characterized in that**
at least one motor vehicle function (F(H), 18), in particular a motor vehicle function (F(H), 18) different from a headlight function of a headlight of a motor vehicle (10), is controlled depending on the provided current brightness value $H(t_n)$.

8. Method according to any of the preceding claims,
**characterized in that**
the at least one motor vehicle function (F(H), 18) is a fatigue detection (18), a current variable describing fatigue of the driver of the motor vehicle (10) being determined depending on the current brightness value (H), and a warning (20) being issued to the driver depending on the current variable.

9. Detection device (12) for a motor vehicle (10), for providing a current brightness value $H(t_n)$ relating to ambient brightness, the detection device (12) comprising at least one brightness sensor (14) designed to detect at a first point in time $t_{n-1}$ at least one first raw brightness value $HR(t_{n-1})$ and chronologically thereafter at a second point in time $t_n$ to detect at least one second raw brightness value $HR(t_n)$, the detection device (12) having an evaluation unit (16) designed to carry out an averaging at least for the at least one second raw brightness value $HR(t_n)$ using at least the at least one first raw brightness value $HR(t_{n-1})$ and to provide a result of the averaging as a current average brightness value $HM(t_n)$,
**characterized in that**
the evaluation unit (16) is designed to subsequently perform a gradient limitation for the current average brightness value $HM(t_n)$, according to which gradient limitation a deviation of the current average brightness value $HM(t_n)$ from at least one chronologically previously provided brightness value $H(t_n)$ is limited to at least one maximum permissible amount if the deviation of the current average brightness value $HM(t_n)$ from the at least one chronologically previously provided brightness value $H(t_{n-1})$ is greater than the at least one maximum permissible amount, and to provide a result of the gradient limitation as the current brightness value $H(t_n)$, the evaluation unit (16) being designed such that, if the deviation of the current average brightness value $HM(t_n)$ from the at least one chronologically previously provided brightness value $H(t_n)$ is not greater than the at least one maximum permissible amount, the current average brightness value $HM(t_n)$ is provided as the result for the current brightness value $H(t_n)$.

10. Motor vehicle (10) having a detection device (12) according to claim 9.

**Revendications**

1. Procédé de mise à disposition d'une valeur de luminosité actuelle $H(t_n)$ concernant une luminosité ambiante, dans lequel une première valeur brute de luminosité $HR(t_{n-1})$ est détectée à un instant $t_{n-1}$ par le biais d'au moins un capteur de luminosité (14) et au moins une seconde valeur brute de luminosité $HR(t_n)$ est détectée ultérieurement dans le temps à un instant $t_n$, dans lequel une moyenne est effectuée au moins pour l'au moins une seconde valeur brute de luminosité $HR(t_n)$ avec au moins l'au moins une première valeur brute de luminosité $HR(t_{n-1})$, et un résultat de la moyenne est mis à disposition en tant que valeur moyenne de luminosité actuelle $HM(t_n)$, **caractérisé en ce qu'**une limitation de gradient est ensuite effectuée pour la valeur moyenne de luminosité actuelle $HM(t_n)$, selon laquelle un écart de la valeur moyenne de luminosité actuelle $HM(t_n)$ par rapport à au moins une valeur de luminosité $H(t_{n-1})$ mise à disposition précédemment dans le temps est limité à au moins une quantité maximale admissible, si l'écart de la valeur moyenne de luminosité actuelle $HM(t_n)$ par rapport à l'au moins une valeur de luminosité $H(t_{n-1})$ mise à disposition précédemment dans le temps est supérieur à l'au moins une quantité maximale admissible, et un résultat de la limitation de gradient est mis à disposition en tant que valeur de luminosité actuelle $H(t_n)$, dans lequel, si l'écart de la valeur moyenne de luminosité actuelle $HM(t_n)$ par rapport à l'au moins une valeur de luminosité $H(t_{n-1})$ mise à disposition précédemment dans le temps n'est pas supérieur à l'au moins une quantité maximale admissible, la valeur moyenne de luminosité actuelle $HM(t_n)$ est mise à disposition en tant que résultat pour la valeur de luminosité actuelle $H(t_n)$.

**2.** Procédé selon la revendication 1,
**caractérisé en ce que**
la limitation de gradient est effectuée en tant que limitation de gradient asymétrique, selon laquelle l'écart de la valeur moyenne de luminosité actuelle $HM(t_n)$ par rapport à l'au moins une valeur de luminosité $H(t_{n-1})$ mise à disposition précédemment dans le temps est limité à une première quantité maximale admissible $\Delta 1$, si la valeur moyenne de luminosité actuelle $HM(t_n)$ est supérieure à l'au moins une valeur de luminosité $H(t_{n-1})$ mise à disposition précédemment dans le temps, et l'écart entre la valeur moyenne de luminosité actuelle $HM(t_n)$ et l'au moins une valeur de luminosité $H(t_{n-1})$ mise à disposition précédemment dans le temps est limité à une seconde quantité maximale admissible $\Delta 2$ si la valeur moyenne de luminosité actuelle $HM(t_n)$ est inférieure à l'au moins une valeur de luminosité $H(t_n)$ mise à disposition précédemment dans le temps, dans lequel la première quantité $\Delta 1$ est différente de la seconde quantité $\Delta 2$.

**3.** Procédé selon la revendication 2,
**caractérisé en ce que**
la première quantité est supérieure à la seconde quantité.

**4.** Procédé selon l'une des revendications précédentes,
**caractérisé en ce que**
l'au moins une valeur de luminosité $H(t_{n-1})$ mise à disposition précédemment dans le temps représente la dernière valeur de luminosité mise à disposition dans le temps.

**5.** Procédé selon l'une des revendications précédentes,
**caractérisé en ce que**
la moyenne pour l'au moins une seconde valeur brute de luminosité $HR(t_n)$ est effectuée sous la forme d'une moyenne pondérée.

**6.** Procédé selon l'une des revendications précédentes,
**caractérisé en ce que**
la moyenne est effectuée sous la forme d'un lissage exponentiel.

**7.** Procédé selon l'une des revendications précédentes,
**caractérisé en ce que**
en fonction de la valeur de luminosité actuelle $H(t_n)$ mise à disposition, au moins une fonction de véhicule automobile (F(H), 18) est commandée, en particulier une fonction de véhicule automobile (F(H), 18) différente d'une fonction de phare d'un phare d'un véhicule automobile (10).

**8.** Procédé selon l'une des revendications précédentes,
**caractérisé en ce que**
l'au moins une fonction de véhicule automobile (F(H), 18) représente une reconnaissance de fatigue (18), dans lequel une grandeur actuelle décrivant une fatigue du conducteur du véhicule automobile (10) est déterminée en fonction de la valeur de luminosité actuelle (H) et un avertissement (20) est émis vers le conducteur en fonction de la grandeur actuelle.

**9.** Dispositif de détection (12) pour un véhicule automobile (10), pour la mise à disposition d'une valeur de luminosité actuelle $H(t_n)$ concernant une luminosité ambiante, dans lequel le dispositif de détection (12) présente au moins un capteur de luminosité (14) qui est conçu pour détecter à un premier instant $t_{n-1}$ au moins une première valeur brute de luminosité $HR(t_{n-1})$ et ultérieurement dans le temps à un second instant $t_n$ au moins une seconde valeur brute de luminosité $HR(t_n)$, dans lequel le dispositif de détection (12) présente une unité d'évaluation (16) qui est conçue pour effectuer, au moins pour l'au moins une seconde valeur brute de luminosité $HR(t_n)$, une moyenne avec au moins l'au moins une première valeur brute de luminosité $HR(t_{n-1})$ et pour mettre à disposition un résultat de la moyenne en tant que valeur moyenne de luminosité actuelle $HM(t_n)$,
**caractérisé en ce que**

l'unité d'évaluation (16) est conçue pour effectuer ensuite pour la valeur moyenne de luminosité actuelle $HM(t_n)$ une limitation de gradient, selon laquelle un écart de la valeur moyenne de luminosité actuelle $HM(t_n)$ par rapport à au moins une valeur de luminosité $H(t_n)$ mise à disposition précédemment dans le temps est limité à au moins une quantité maximale admissible, si l'écart de la valeur moyenne de luminosité actuelle $HM(t_n)$ par rapport à l'au moins une valeur de luminosité $H(t_{n-1})$ mise à disposition précédemment dans le temps est supérieur à l'au moins une quantité maximale admissible, et mettre à disposition un résultat de la limitation de gradient en tant que valeur de luminosité actuelle $H(t_n)$, et dans lequel l'unité d'évaluation (16) est agencée de telle sorte que, si l'écart de la valeur moyenne de luminosité actuelle $HM(t_n)$ par rapport à l'au moins une valeur de luminosité $H(t_n)$ mise à disposition précédemment dans le temps n'est pas supérieur à l'au moins une quantité maximale admissible, la valeur moyenne de luminosité actuelle $HM(t_n)$ est mise à disposition en tant que résultat pour la valeur de luminosité actuelle $H(t_n)$.

10. Véhicule automobile (10) comportant un dispositif de détection (12) selon la revendication 9.

**Fig. 1**

**Fig. 2**

Fig. 3

**IN DER BESCHREIBUNG AUFGEFÜHRTE DOKUMENTE**

**In der Beschreibung aufgeführte Patentdokumente**

- DE 3511167 A1
- DE 19957210 A1
- DE 10163356 A1
- WO 9419212 A2